# EUROPEAN PATENT APPLICATION

(11) **EP 4 807 320 A1**
(43) Date of publication of application: **16.09.2026**
(21) Application number: 24895523.9
(22) Date of filing: 05.06.2024
(51) Int. Cl.: G01C 19/574

(54) **GYROSCOPE STRUCTURE, CHIP, GYROSCOPE, AND ELECTRONIC DEVICE**

(30) Priority: 30.11.2023 CN 202311634422
(71) Applicant: Huawei Technologies Co., Ltd., Shenzhen, Guangdong 518129 (CN)
(72) Inventor: CHEN, Dongyang, Shenzhen, Guangdong 518129 (CN); TANG, Shihao, Shenzhen, Guangdong 518129 (CN); CHANG, Zhiwu, Shenzhen, Guangdong 518129 (CN); XU, Jinghui, Shenzhen, Guangdong 518129 (CN)
(74) Representative: Epping - Hermann - Fischer
(86) International application number: PCT/CN2024/097434
(87) International publication number: WO 2025/112417

(57) **Abstract**

A gyroscope structure, a chip, a gyroscope, and an electronic device are provided. The gyroscope structure includes a substrate (100) and a first structural layer (300). The first structural layer (300) includes an anchor (301), a first elastic structure (304), a second elastic structure (314), a third elastic structure (302), a first lever (303), a first mass (305), and a second mass (315). The anchor (301) is connected to the substrate (100), the third elastic structure (302) is configured to connect the anchor (301) to the first lever (303), the first elastic structure (304) is configured to connect the first lever (303) to the first mass (305), and the second elastic structure (314) is configured to connect the first lever (303) to the second mass (315). Therefore, a quadrature problem caused by micro-mechanical machining can be suppressed and mutually canceled by torsion of the first lever (303), improving precision and stability of a gyroscope.

## Description

This application claims priority to Chinese Patent Application No. 202311634422.X, filed with the China National Intellectual Property Administration on November 30, 2023 and entitled "GYROSCOPE STRUCTURE, CHIP, GYROSCOPE, AND ELECTRONIC DEVICE", which is incorporated herein by reference in its entirety.

### TECHNICAL FIELD

Embodiments of this application relate to the field of sensor technologies, and specifically, to a gyroscope structure, a chip, a gyroscope, and an electronic device.

### BACKGROUND

Gyroscopes are a class of sensors that can sense angular velocities in space. Gyroscopes can obtain information such as rotation angles, carrier attitudes, and motion coordinate systems through integration of angular velocities. A gyroscope manufactured by using a gyroscope technology in micro-mechanical machining, also referred to as a micro-electro-mechanical system (micro-electro-mechanical system, MEMS) gyroscope, has advantages such as being small in volume, low in costs, and low in power consumption.

The MEMS gyroscope operates on physical principles of the Coriolis force (Coriolis force) to sense an angular velocity. To be specific, based on controlling a mass structure to perform rectilinear motion, an angular velocity input is set in an orthogonal-axis direction of the rectilinear motion. In this case, the Coriolis force is generated in a third orthogonal-axis direction. Typically, a mechanical resonator mode is used to implement linear motion, that is, a drive mode, while another mechanical mode is used to implement detection of the Coriolis force, that is, a detection mode. Therefore, angular velocity information can be obtained by detecting, in a proper manner, a mechanical displacement of a mass caused by the Coriolis force.

According to principles of the Coriolis effect, the drive mode and the detection mode should be strictly orthogonal, that is, the mechanical displacement generated in the third orthogonal-axis direction only results from the Coriolis effect caused by the angular velocity input. However, there are always some imperfections about structural and dimensional parameters in micro-mechanical machining, resulting in failure to ensure that the drive mode and the detection mode are strictly orthogonal. A displacement of the drive mode is projected onto the detection mode, compromising precision and stability of the gyroscope.

### SUMMARY

Embodiments of this application provide a gyroscope structure, to avoid a quadrature problem caused by a structure manufacturing error and to improve precision and stability of a gyroscope. The embodiments of this application further provide a corresponding chip, a gyroscope, and an electronic device.

A first aspect of this application provides a gyroscope structure. The gyroscope structure includes a substrate and a first structural layer. The first structural layer includes a fastening anchor, a first elastic structure, a second elastic structure, a first lever, a third elastic structure, a first mass, and a second mass. The fastening anchor is connected to the substrate, the third elastic structure is configured to connect the fastening anchor to the first lever, the first elastic structure is configured to connect the first lever to the first mass, and the second elastic structure is configured to connect the first lever to the second mass. The first mass and the second mass are mirror-symmetrical along a first central line, and the first central line is perpendicular to a torque direction of the first lever. The first structural layer in this application is a symmetrical structure, being not only vertically but also horizontally symmetrical. Based on a top view of the first structural layer, the first central line is located in the exact middle of left and right sides of the first structural layer, and a second central line is located in the exact middle of upper and lower sides of the first structural layer.

In this application, the third elastic structure has a degree of freedom in twisting around the first central line, that is, a degree of freedom in rotating around a Y-axis direction. Therefore, the first lever also rotates around the Y-axis direction. In this case, the torque direction of the first lever is an X-axis direction. Regardless of how a shape of the first lever changes, the torque direction of the first lever is the X-axis direction. The first central line may also be located on a same plane as the first lever. When the first central line is perpendicular to the X-axis direction, and the first mass and the second mass are mirror-symmetrical along the first central line, it can be determined that the first central line is located in the middle of the left and right sides of the first structural layer. This is also applicable to the second central line.

In this application, a manner of connecting the fastening anchor to the substrate is fastening. In this way, the entire first structural layer is fastened to the substrate. A process approach for connecting the fastening anchor to the substrate may be a bonding process, for example, gold-silicon bonding, aluminum-germanium bonding, anodic bonding, fusion bonding, or glass-frit (glass-frit) bonding.

In this application, the first elastic structure and the second elastic structure have a degree of freedom in moving along the X-axis direction, and have a high stiffness against moving along the Y-axis direction. For example, the stiffnesses of the first elastic structure and the second elastic structure against moving along the Y-axis direction are more than twice stiffnesses against moving along the X-axis direction. To be specific, the first elastic structure can support the first mass to move along an X-axis, but restricts the first mass from moving along a Y-axis; and the second elastic structure supports the second mass to move along the X-axis, but restricts the second mass from moving along the Y-axis. The third elastic structure has a degree of freedom in twisting around the first central line, that is, a degree of freedom in rotating around the Y-axis direction. In addition, the third elastic structure has high stiffnesses against rotating around the X-axis and a Z-axis. For example, the stiffness of the third elastic structure against rotating around the X-axis direction is more than twice a stiffness against rotating around the Y-axis direction. To be specific, the third elastic structure can support the first lever to rotate around the Y-axis direction, but restricts the first lever from rotating around the X-axis direction, and also restricts the first lever from rotating around a Z-axis direction. The third elastic structure may be specifically a straight beam, a foldable beam, or the like that is along the Y-axis.

In this application, when the gyroscope structure provided in this embodiment of this application is used, the gyroscope structure is mounted on a target object. When the target object spins or rotates around the Y-axis in space, an angular velocity input is generated. The angular velocity input is also transferred to the first structural layer. Because a first direction and a second direction are both perpendicular to the first central line, it indicates that the first direction and the second direction are both along the X-axis direction. When the first mass is subjected to a drive force that is along the first direction, the first mass moves also along the first direction because the first elastic structure is not constrained in the X-axis direction. Likewise, when the second mass is subjected to a drive force that is along the second direction, the second mass moves also along the second direction because the second elastic structure is not constrained in the X-axis direction. Due to the Coriolis effect, with a Y-axis angular velocity input superimposed on displacement along the X-axis, the first mass and the second mass also produce two displacements in opposite directions in the Z-axis direction. In this case, information about a horizontal-axis angular velocity can be obtained by detecting displacement amounts of the first mass and the second mass in the Z-axis direction.

In this application, the first lever at the first structural layer twists around the first central line, implementing a structural force balance between the first mass and the second mass in the Z-axis direction. Moments of inertia, on the first mass and the second mass, caused by a manufacturing error from which the first elastic structure and the second elastic structure suffer can be suppressed and mutually canceled by torsion of the first lever around the Y-axis, reducing a quadrature angular velocity.

According to the first aspect, the gyroscope structure includes a substrate and a structural layer. The structural layer includes an anchor, a first elastic structure, a second elastic structure, a third elastic structure, a lever, a first mass, and a second mass. The anchor is connected to the substrate, the third elastic structure is configured to connect the anchor to the lever, the first elastic structure is configured to connect the lever to the first mass, and the second elastic structure is configured to connect the lever to the second mass. Therefore, a quadrature problem caused by a structure-manufacturing-error-tolerant structure that results from micro-mechanical machining can be suppressed and mutually canceled by torsion of the first lever, improving precision and stability of a gyroscope.

In a possible implementation of the first aspect, the gyroscope structure further includes a detection electrode, the detection electrode is located between the substrate and the first structural layer, the detection electrode is configured to output a detection electrical-signal based on displacement of the first mass along a third direction and displacement of the second mass along a fourth direction, the third direction is perpendicular to the first central line, the third direction is perpendicular to the first direction and is located on a different plane, and the third direction is opposite to the fourth direction.

In this possible implementation, a first detection electrode and the first mass form a first parallel plate capacitor, and a second detection electrode and the second mass form a second parallel plate capacitor. When an angular velocity is input, differential detection displacement caused by the Coriolis force results in an increase in a gap of the first parallel plate capacitor and a decrease in a gap of the second parallel plate capacitor. Therefore, a differential change in capacitance is directly generated. The change may be read by an electrical signal amplifier, which outputs a detection electrical-signal. As such, implementability of the solution is improved.

In a possible implementation of the first aspect, the first structural layer further includes a first drive structure and a second drive structure, the first drive structure is connected to the substrate and coupled to the first mass, and the second drive structure is connected to the substrate and coupled to the second mass; and the first drive structure is configured to drive the first mass to move along the first direction, the second drive structure is configured to drive the second mass to move along the second direction, the first direction is perpendicular to the first central line, and the first direction is opposite to the second direction.

In this possible implementation, the first drive structure and the second drive structure both include a fixed drive comb and comb tooth structures. The fixed drive combs and the comb tooth structures are connected to the substrate. When direct current and alternating current signals are applied to the fixed drive combs, an electrostatic force generated in the first drive structure drives the first mass and the first elastic structure to move in the first direction along the X-axis, and an electrostatic force generated in the second drive structure drives the second mass and the second elastic structure to move in the second direction along the X-axis. As such, implementability of the solution is improved.

In a possible implementation of the first aspect, the first drive structure and the second drive structure are mirror-symmetrical along the first central line.

In this possible implementation, that the first drive structure and the second drive structure are symmetrical facilitates machining and manufacturing of the entire first structural layer, reducing complexity of a process flow.

In a possible implementation of the first aspect, the first structural layer further includes a first drive detection structure and a second drive detection structure, the first drive detection structure is connected to the substrate and coupled to the first mass, and the second drive detection structure is connected to the substrate and coupled to the second mass; and the first drive detection structure is configured to convert a first displacement signal generated due to displacement of the first mass into a first electrical signal, and output the first electrical signal; and the second drive detection structure is configured to convert a second displacement signal generated due to displacement of the second mass into a second electrical signal, and output the second electrical signal.

In this possible implementation, the first drive detection structure and the second drive detection structure both include a drive detection comb and comb tooth structures. The drive detection combs and the comb tooth structures are connected to the substrate. The drive detection combs may convert the signals generated due to mechanical displacement of the first mass and the second mass along the X-axis, into the first electrical signal and the second electrical signal, and output the first electrical signal and the second electrical signal. As feedback signals, the first electrical signal and the second electrical signal go through circuit stages such as phase shifting and amplification, and return to the drive combs, implementing closed-loop oscillation in a drive mode. As such, implementability of the solution is improved.

In a possible implementation of the first aspect, the first drive detection structure and the second drive detection structure are mirror-symmetrical along the first central line.

In this possible implementation, that the first drive detection structure and the second drive detection structure are symmetrical facilitates machining and manufacturing of the entire first structural layer, reducing complexity of a process flow.

In a possible implementation of the first aspect, the first elastic structure and the second elastic structure are mirror-symmetrical along the first central line.

In this possible implementation, the first elastic structure and the second elastic structure are also mirror-symmetrical along the first central line, enabling the entire first structural layer to be mirror-symmetrical along the first central line. As such, implementability of the solution is improved. In a possible implementation of the first aspect, there are at least two first elastic structures and at least two second elastic structures.

In this possible implementation, there may be a plurality of first elastic structures and a plurality of second elastic structures. As such, implementability of the solution is improved.

In a possible implementation of the first aspect, the third elastic structure is located at a center of the first lever.

In this possible implementation, the first lever is connected to the third elastic structure at a center point that is of the first structural layer in the X-axis direction. In this case, when the first lever twists around the first central line, displacements of two ends of the first lever along the Z-axis direction (which may also be understood as a force transfer ratio) are 1:1, implementing torsional symmetry.

In a possible implementation of the first aspect, the first elastic structure is a spring or a foldable beam, the second elastic structure is a spring or a foldable beam, and the third elastic structure is a spring, a straight beam, or a foldable beam.

In this possible implementation, there are a plurality of possible implementations for all of the first elastic structure, the second elastic structure, and the third elastic structure. As such, implementability of the solution is improved.

In a possible implementation of the first aspect, the first structural layer further includes a fourth elastic structure, and the fourth elastic structure is configured to connect the first mass and the second mass.

In this possible implementation, when the first mass and the second mass move in opposite directions along the X-axis direction, the fourth elastic structure has a same displacement amplitude, that is, the fourth elastic structure participates in opposite-direction displacement of the first mass and the second mass and provides a stiffness against moving. When the first mass and the second mass move in a same direction along the X-axis direction, the fourth elastic structure produces no displacement, or produces a displacement far less than a displacement produced in the case in which the first mass and the second mass move in opposite directions along the X-axis direction, that is, the fourth elastic structure does not participate in same-direction displacement of the first mass and the second mass and does not provide a stiffness against moving. Therefore, due to introduction of the fourth elastic structure, there is a difference between a stiffness of the first mass and the second mass against opposite-direction displacement and a stiffness against same-direction displacement. Further, since a stiffness is related to a modal frequency, there is a difference between a modal frequency of the first mass and the second mass for opposite-direction displacement and a modal frequency for same-direction displacement, mitigating a common-mode error.

In a possible implementation of the first aspect, the first lever includes a bent portion, and the third elastic structure is configured to connect the fastening anchor to the bent portion.

In this possible implementation, due to presence of the fastening anchor, the first lever may bend or deform to fit with a position of the fastening anchor. With the fastening anchor connected to the bent portion by the third elastic structure, the fastening anchor does not increase an area of the first structural layer, miniaturizing the gyroscope structure.

In a possible implementation of the first aspect, there are two first levers, the two first levers are mirror-symmetrical along the second central line, and the second central line is parallel to the torque direction of the first lever.

In this possible implementation, there may also be a plurality of first levers at the first structural layer. As such, implementability of the solution is improved.

In a possible implementation of the first aspect, the gyroscope structure further includes a second structural layer, a first coupling structure, and a second coupling structure; and the second structural layer and the first structural layer are mirror-symmetrical along a third central line, the third central line is parallel to the torque direction of the first lever, the first coupling structure is configured to connect the first structural layer to the second structural layer, and the second coupling structure is configured to connect the first structural layer to the second structural layer. In this possible implementation, a form of two pairs of differential motion and a displacement detection form that are implemented by four masses at the first structural layer and the second structural layer can further eliminate a common-mode error, mitigating deterioration of precision and stability caused by a bonding-process-introduced inconsistency in gaps of detection capacitors. In a possible implementation of the first aspect, the first coupling structure includes a fifth elastic structure, a sixth elastic structure, a seventh elastic structure, and a second lever, where the seventh elastic structure is configured to connect the fastening anchor to the second lever, the fifth elastic structure is configured to connect the second lever to the first structural layer, and the sixth elastic structure is configured to connect the second lever to the second structural layer.

In this possible implementation, the first coupling structure and the second coupling structure are configured to couple the first structural layer and the second structural layer, implementing the form of two pairs of differential motion and the displacement detection form. As such, implementability of the solution is improved.

In a possible implementation of the first aspect, the fastening anchors include a first anchor, a second anchor, a third anchor, and a fourth anchor, the first anchor is connected to the first structural layer, the second anchor is connected to the second structural layer, the third anchor is connected to the first coupling structure, and the fourth anchor is connected to the second coupling structure.

In this possible implementation, the fastening anchors can be decoupled into a plurality of anchors. As such, implementability of the solution is improved.

In a possible implementation of the first aspect, the fifth elastic structure and the sixth elastic structure are mirror-symmetrical along the third central line.

In this possible implementation, the fifth elastic structure and the sixth elastic structure are also mirror-symmetrical along the third central line, enabling the entire gyroscope structure to be mirror-symmetrical along the second central line. As such, implementability of the solution is improved.

In a possible implementation of the first aspect, the seventh elastic structure is located at a center of the second lever.

In this possible implementation, the second lever is connected to the seventh elastic structure at a center point that is of the gyroscope structure in the Y-axis direction. In this case, when the second lever twists around the X-axis direction, displacements of two ends of the second lever along the Z-axis direction (which may also be understood as a force transfer ratio) are 1:1, implementing torsional symmetry. When the second lever twists around the Z-axis direction, displacements of the two ends of the second lever along the X-axis direction are also 1:1, implementing torsional symmetry.

In a possible implementation of the first aspect, the first coupling structure and the second coupling structure are mirror-symmetrical along the first central line.

In this possible implementation, the first coupling structure and the second coupling structure are also mirror-symmetrical along the first central line, enabling the entire gyroscope structure to be mirror-symmetrical along the first central line. As such, implementability of the solution is improved.

A second aspect of this application provides a gyroscope structure. The gyroscope structure includes a substrate, a first structural layer, a second structural layer, a first coupling structure, and a second coupling structure. The first structural layer includes a fastening anchor, a first elastic structure, a second elastic structure, a first lever, a third elastic structure, a first mass, and a second mass. The fastening anchor is connected to the substrate, the third elastic structure is configured to connect the fastening anchor to the first lever, the first elastic structure is configured to connect the first lever to the first mass, and the second elastic structure is configured to connect the first lever to the second mass. The first mass and the second mass are mirror-symmetrical along a first central line, and the first central line is perpendicular to a torque direction of the first lever. The second structural layer and the first structural layer are mirror-symmetrical along a second central line, the second central line is parallel to the torque direction of the first lever, the first coupling structure is configured to connect the first structural layer to the second structural layer, and the second coupling structure is configured to connect the first structural layer to the second structural layer.

A third aspect of this application provides a chip. The chip includes the gyroscope structure according to any one of the first aspect or the possible implementations of the first aspect and a package structure. The package structure is configured to enclose the first structural layer in a sealed cavity.

In a possible implementation of the third aspect, a vacuum level in the sealed cavity is less than or equal to 100 Pa.

A fourth aspect of this application provides a gyroscope. The gyroscope includes the gyroscope structure according to any one of the first aspect or the possible implementations of the first aspect and an application-specific integrated circuit. The application-specific integrated circuit is electrically connected to the gyroscope structure, and the application-specific integrated circuit is configured to provide a drive signal to the gyroscope structure.

A fifth aspect of this application provides an electronic device. The electronic device includes the gyroscope structure according to any one of the first aspect or the possible implementations of the first aspect and a calculation unit. The calculation unit is configured to determine angular velocity information based on output data of the gyroscope structure.

### BRIEF DESCRIPTION OF DRAWINGS

FIG. 1 and FIG. 2 are diagrams of a drive mode and a detection mode of a gyroscope;
FIG. 3 is a diagram of an embodiment of a first structural layer according to an embodiment of this application;
FIG. 4 is a diagram of an embodiment of a gyroscope structure according to an embodiment of this application;
FIG. 5 is a diagram of another embodiment of a first structural layer according to an embodiment of this application;
FIG. 6 is a diagram of a drive mode of a gyroscope structure according to an embodiment of this application;
FIG. 7 and FIG. 8 are diagrams of a detection mode of a gyroscope structure according to an embodiment of this application;
FIG. 9 is a diagram of another embodiment of a gyroscope structure according to an embodiment of this application;
FIG. 10 is a diagram of an embodiment of a first structural layer and a second structural layer according to an embodiment of this application;
FIG. 11 is a diagram of another drive mode of a gyroscope structure according to an embodiment of this application;
FIG. 12 and FIG. 13 are diagrams of another detection mode of a gyroscope structure according to an embodiment of this application;
FIG. 14 to FIG. 16 are diagrams of embodiments of a chip according to an embodiment of this application; and
FIG. 17 is a diagram of an embodiment of an electronic device and a gyroscope according to an embodiment of this application.

### DESCRIPTION OF EMBODIMENTS

The following describes embodiments of this application with reference to the accompanying drawings. It is clear that the described embodiments are merely some rather than all of the embodiments of this application. Persons of ordinary skill in the art may know that with development of technologies and emergence of new scenarios, the technical solutions provided in embodiments of this application are also applicable to resolving similar technical problems.

In the specification, claims, and accompanying drawings of this application, the terms such as "first" and "second" are intended to distinguish between similar objects but do not necessarily describe a particular order or sequence. It should be understood that the terms used in such a way are interchangeable in appropriate circumstances, so that embodiments described herein can be implemented in an order other than the content illustrated or described herein. In addition, terms "include", "have", and any variations thereof are intended to cover non-exclusive inclusions. For example, a process, method, system, product, or device that includes a series of steps or units is not necessarily limited to those clearly listed steps or units, but may include other steps or units that are not clearly listed or are inherent to such a process, method, product, or device.

The specific word "example" used herein means "to be used as an example or embodiment or to be used for illustrative purposes". Any embodiment described as "an example" herein need not be construed as being superior or better than other embodiments.

In addition, to better describe this application, numerous specific details are given in the specific implementations below. Persons skilled in the art should understand that this application can also be implemented without some specific details. In some instances, methods, means, elements, and circuits that are familiar to persons skilled in the art are not described in detail, to highlight main purposes of this application.

The following describes, by using an example, an application scenario related to embodiments of this application.

Gyroscopes are a class of sensors that can sense angular velocities in space. Gyroscopes can obtain information such as rotation angles, carrier attitudes, and motion coordinate systems through integration of angular velocities, can be used in scenarios such as navigation, motion, and attitude sensing, and are widely used in fields such as consumer terminals, automotive electronics, and aerospace equipment.

A gyroscope manufactured by using a gyroscope technology in micro-mechanical machining is also referred to as a micro-electro-mechanical system (micro-electro-mechanical system, MEMS) gyroscope. Specifically, a MEMS chip is manufactured by using a micro-mechanical machining technology, and the MEMS chip is further packaged, thus obtaining a MEMS gyroscope. The MEMS gyroscope has advantages such as being small in volume, low in costs, and low in power consumption. The micro-mechanical machining technology is usually based on planar structure etching to form the MEMS gyroscope. A horizontal-axis gyroscope of a planar structure can detect and obtain roll and pitch angles, helping miniaturize a three-axis gyroscope and a six-axis inertial measurement unit (inertial measurement unit, IMU).

The MEMS gyroscope operates on physical principles of the Coriolis force (Coriolis force) to sense an angular velocity. To be specific, based on controlling a mass structure to perform rectilinear motion, an angular velocity input is set in an orthogonal-axis direction of the rectilinear motion. In this case, the Coriolis force is generated in a third orthogonal-axis direction. Typically, a mechanical resonator mode is used to implement linear motion, that is, a drive mode, while another mechanical mode is used to implement detection of the Coriolis force, that is, a detection mode. Therefore, angular velocity information can be obtained by detecting, in a proper manner, a mechanical displacement of a mass caused by the Coriolis force.

A mode is a vibration characteristic inherent in a structural system. A mechanical mode represents resonant motion of mass-elastic structure. The drive mode specifically refers to resonant motion of mass-elastic structure designed in the MEMS gyroscope, used to implement linear vibration of a mass. The detection mode also specifically refers to another resonant motion of mass-elastic structure designed in the MEMS gyroscope, used to implement detection of the Coriolis force.

A formula for the Coriolis force is *F* = - 2*mΩ* × *v*, where *m* is mass of an object, *v* is a linear velocity of the object, and *Ω* is an angular velocity of a rotation experienced by the object. In addition, *F*, *v*, *and Ω* all have a direction, and "×" in the formula is to calculate a cross product of the vectors. *F*, *v*, *and Ω* are mutually perpendicular to each other. Therefore, angular velocity information can be obtained by detecting, in a proper manner, a mechanical displacement of the mass caused by the Coriolis force.

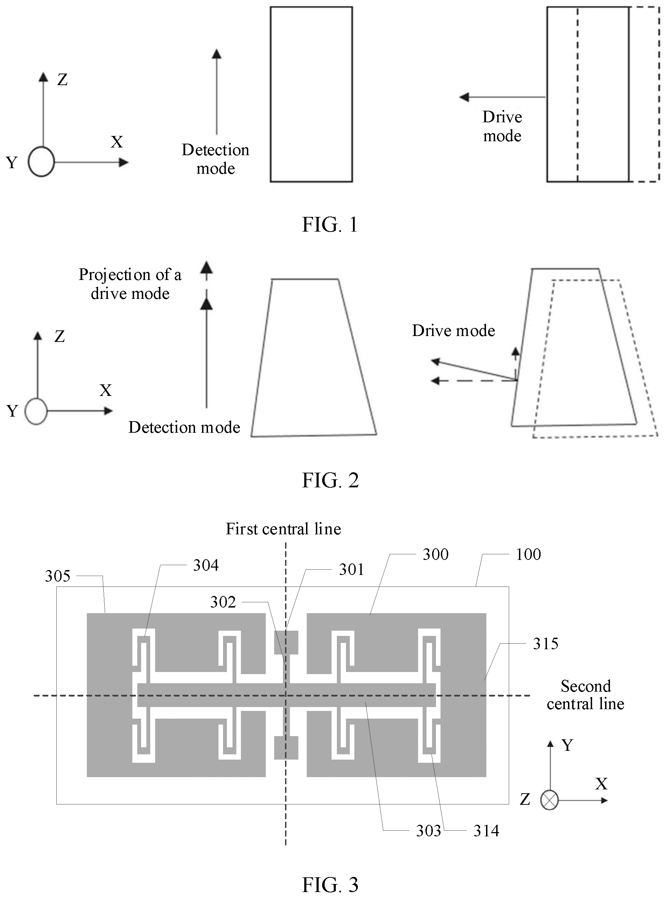

As shown in FIG. 1, according to principles of the Coriolis effect, the drive mode and the detection mode should be strictly orthogonal, that is, the mechanical displacement generated in the third orthogonal-axis (Z-axis) direction only results from the Coriolis effect caused by the angular velocity input. However, there are always some imperfections about structural and dimensional parameters in micro-mechanical machining, resulting in failure to ensure that the drive mode and the detection mode are strictly orthogonal. As shown in FIG. 2, a displacement of the drive mode is projected onto the detection mode. As a result, while detecting the Coriolis force, the detection mode also detects a projection of the drive mode, resulting in a phase difference of 90° or 270° between a signal caused by a quadrature angular velocity and a signal caused by an actual angular velocity. Consequently, precision and stability of the gyroscope are compromised. For a MEMS horizontal-axis gyroscope operating on principles of linear vibration, a quadrature angular velocity is particularly sensitive to imperfections in micro-mechanical machining. Structure manufacturing errors include parameters such as an out-of-plane capacitive gap and an etching error of a beam of an elastic structure. The quadrature angular velocity may reach ±10⁵ degrees per second (dps), far exceeding a measurement range of ±10³ dps of a gyroscope.

Therefore, control of quadrature coupling severely affects precision of MEMS horizontal-axis gyroscopes and a wafer yield of MEMS chips. Based on this, embodiments of this application provide a gyroscope structure, to avoid a quadrature problem caused by a structure-manufacturing-error-tolerant structure and to improve precision and stability of a gyroscope. The embodiments of this application further provide a corresponding chip, a gyroscope, and an electronic device. They are separately described in detail below.

With reference to the application scenario, the following describes the gyroscope structure provided in the embodiments of this application.

As shown in FIG. 3, an embodiment of this application provides a gyroscope structure. An embodiment of the gyroscope structure includes a substrate 100 and a first structural layer 300. The first structural layer 300 includes a fastening anchor 301, a first elastic structure 304, a second elastic structure 314, a first lever 303, a third elastic structure 302, a first mass 305, and a second mass 315.

The fastening anchor 301 is connected to the substrate 100. The third elastic structure 302 is configured to connect the fastening anchor 301 to the first lever 303. The first elastic structure 304 is configured to connect the first lever 303 to the first mass 305. The second elastic structure 314 is configured to connect the first lever 303 to the second mass 315. The first mass 305 and the second mass 315 are mirror-symmetrical along a first central line. In addition, the first central line is perpendicular to a torque direction of the first lever 303.

For a purpose of better illustrating the gyroscope structure provided in this embodiment of this application, a three-dimensional rectangular coordinate system is established based on a top view of the first structural layer 300. The three-dimensional rectangular coordinate system includes an X-axis, a Y-axis, and a Z-axis that are orthogonal to each other.

For example, the first structural layer 300 is a symmetrical structure, being not only vertically but also horizontally symmetrical. To be specific, the first structural layer 300 is mirror-symmetrical along the first central line and a second central line. The second central line is parallel to the torque direction of the first lever 303. Specifically, based on the top view of the first structural layer 300, the first central line is located in the exact middle of left and right sides of the first structural layer 300, where the first central line is parallel to the Y-axis, that is, the first central line is a central axis of the gyroscope structure along an X-axis direction; and the second central line is located in the exact middle of upper and lower sides of the first structural layer 300, where the second central line is parallel to the X-axis, that is, the second central line is a central axis of the gyroscope structure along a Y-axis direction.

In addition, the third elastic structure 302 has a degree of freedom in twisting around the first central line, that is, a degree of freedom in rotating around the Y-axis direction. Therefore, the first lever 303 also rotates around the Y-axis direction. In this case, the torque direction of the first lever 303 is the X-axis direction. Regardless of how a shape of the first lever 303 changes, the torque direction of the first lever 303 is the X-axis direction. The first central line may also be located on a same plane as the first lever 303. When the first central line is perpendicular to the X-axis direction, and the first mass 305 and the second mass 315 are mirror-symmetrical along the first central line, it can be determined that the first central line is at a position shown in FIG. 3. This is also applicable to the second central line.

For example, there may be a plurality of fastening anchors 301, or a plurality of fastening anchors 301 may be coupled into one fastening anchor 301, that is, a plurality of anchors at different positions form a complete fastening anchor 301 via a connecting structural part. In this embodiment of this application, an example is used for description, in which there are two fastening anchors 301. Likewise, there may be a plurality of third elastic structures 302, or may be one third elastic structure 302. In this embodiment of this application, there are also two third elastic structures 302. A quantity of third elastic structures 302 is the same as a quantity of fastening anchors 301.

For example, the fastening anchor 301 includes a first sub-anchor (located above the first lever) and a second sub-anchor (located below the first lever), and the third elastic structure 302 includes a first elastic sub-structure (located above the first lever) and a second elastic sub-structure (located below the first lever). The first sub-anchor and the second sub-anchor are mirror-symmetrical along the second central line. The first sub-anchor and the second sub-anchor are both connected to the substrate 100, with a manner of connection being fastening. In this way, the entire first structural layer 300 is fastened to the substrate 100. A process approach for connecting the first sub-anchor and the second sub-anchor to the substrate 100 may be a bonding process, for example, gold-silicon bonding, aluminum-germanium bonding, anodic bonding, fusion bonding, or glass-frit (glass-frit) bonding. The first elastic sub-structure and the second elastic sub-structure connect the first sub-anchor and the second sub-anchor to the first lever 303, respectively. The first lever 303 is located on the second central line, that is, located in the exact middle of the upper and lower sides of the first structural layer 300.

For example, elastic structures such as the first elastic structure 304, the second elastic structure 314, and the third elastic structure 302 may be specifically springs or other structures that can provide a degree of freedom in moving. For example, the first elastic structure 304 is a spring or a foldable beam, the second elastic structure 314 is a spring or a foldable beam, and the third elastic structure 302 is a spring, a straight beam, or a foldable beam. There are at least two first elastic structures 304 and at least two second elastic structures 314. In this embodiment of this application, an example is used for description, in which there are four first elastic structures 304 and four second elastic structures 314. The four first elastic structures 304 connect the first lever 303 to the first mass 305, and the four second elastic structures 314 connect the first lever 303 to the second mass 315. The four first elastic structures 304 and the four second elastic structures 314 are also mirror-symmetrical along the first central line.

The first elastic structure 304 and the second elastic structure 314 have a degree of freedom in moving along the X-axis direction, and have a high stiffness against moving along the Y-axis direction. For example, the stiffnesses of the first elastic structure 304 and the second elastic structure 314 against moving along the Y-axis direction are more than twice stiffnesses against moving along the X-axis direction. To be specific, the first elastic structure 304 can support the first mass 305 to move along the X-axis (in any direction along the X-axis), but restricts the first mass 305 from moving along the Y-axis; and the second elastic structure 314 supports the second mass 315 to move along the X-axis, but restricts the second mass 315 from moving along the Y-axis.

The third elastic structure 302 has a degree of freedom in twisting around the first central line, that is, a degree of freedom in rotating around the Y-axis direction. In addition, the third elastic structure 302 has high stiffnesses against rotating around the X-axis and the Z-axis. For example, the stiffness of the third elastic structure 302 against rotating around the X-axis direction is more than twice a stiffness against rotating around the Y-axis direction. To be specific, the third elastic structure 302 can support the first lever 303 to rotate around the Y-axis direction, but restricts the first lever 303 from rotating around the X-axis direction, and also restricts the first lever 303 from rotating around a Z-axis direction. In this case, it can also be determined that the torque direction of the first lever 303 is the X-axis direction. The third elastic structure 302 may be specifically a straight beam, a foldable beam, or the like that is along the Y-axis.

Optionally, the third elastic structure 302 is located at a center of the first lever 303, that is, the first lever 303 is connected to the third elastic structure 302 at a center point that is of the first structural layer 300 in the X-axis direction. In this case, when the first lever 303 twists around the first central line, displacements of two ends of the first lever 303 along the Z-axis direction (which may also be understood as a force transfer ratio) are 1:1.

It should be understood that the first structural layer 300 may alternatively not be completely symmetrical. For example, the first elastic structures 304 and the second elastic structures 314 are not mirror-symmetrical along the first central line, and the first sub-anchor and the second sub-anchor are not mirror-symmetrical along the second central line. In addition, alternatively, there may be only one first elastic structure 304 and only one second elastic structure 314, or the first elastic structure 304 and the second elastic structure 314 are coupled into one elastic structure, provided that connection relationships between the components are met and that corresponding functions are implemented. Factors such as being symmetrical or not and quantities of the components are not limited in this embodiment of this application.

When the gyroscope structure provided in this embodiment of this application is used, the gyroscope structure is mounted on a target object. When the target object spins or rotates around the Y-axis in space, an angular velocity input is generated. The angular velocity input is also transferred to the first structural layer 300. Because a first direction and a second direction are both perpendicular to the first central line and are located on a same plane, it indicates that the first direction and the second direction are both along the X-axis direction. When the first mass 305 is subjected to a drive force that is along the first direction, the first mass 305 moves also along the first direction because the first elastic structures 304 are not constrained in the X-axis direction. Likewise, when the second mass 315 is subjected to a drive force that is along the second direction, the second mass 315 moves also along the second direction because the second elastic structures 314 are not constrained in the X-axis direction. Due to the Coriolis effect, with a Y-axis angular velocity input superimposed on displacement along the X-axis, the first mass 305 and the second mass 315 also produce two displacements in opposite directions in the Z-axis direction. In this case, information about a horizontal-axis angular velocity can be obtained by detecting displacement amounts of the first mass 305 and the second mass 315 in the Z-axis direction.

With reference to FIG. 1 and FIG. 2 together, for example, a structure manufacturing error may be presented as an around-the-Y-axis etching error from which the first elastic structure 304 and the second elastic structure 314 may suffer. If the error does not exist, there is no displacement component in another direction when the first mass 305 and the second mass 315 move along the X-axis. However, due to factors such as micrometer-scale and nanometer-scale machining errors, the first elastic structure 304 and the second elastic structure 314 suffer from the around-the-Y-axis etching error. Because of moments of inertia, the first mass 305 and the second mass 315 also produce displacements in the Z-axis direction when moving along the X-axis. In this case, there is an error in results of detecting the displacements produced by the first mass 305 and the second mass 315 in the Z-axis direction. The displacements produced due to the error further result in an angular velocity output, which is referred to as a quadrature angular velocity. There is a phase difference of 90° between a signal caused by the quadrature angular velocity and a signal caused by an actual angular velocity input. In addition, the quadrature angular velocity is quite sensitive to a structure manufacturing error. As a result, the quadrature angular velocity may usually reach tens of thousands of degrees per second, far exceeding a measurement range of an ordinary gyroscope. Consequently, precision and stability of a sensor system are compromised. In this embodiment of this application, the first lever 303 at the first structural layer 300 twists around the first central line, implementing a structural force balance between the first mass 305 and the second mass 315 in the Z-axis direction while implementing a horizontal-axis gyroscopic effect. The moments of inertia, on the first mass 305 and the second mass 315, caused by the structure manufacturing error from which the first elastic structure 304 and the second elastic structure 314 suffer can be suppressed and mutually canceled by torsion of the first lever 303 around the Y-axis, reducing the quadrature angular velocity. Therefore, the gyroscope structure provided in this embodiment of this application can reduce sensitivity to a structure manufacturing error during machining of MEMS chips, improving a yield and production efficiency.

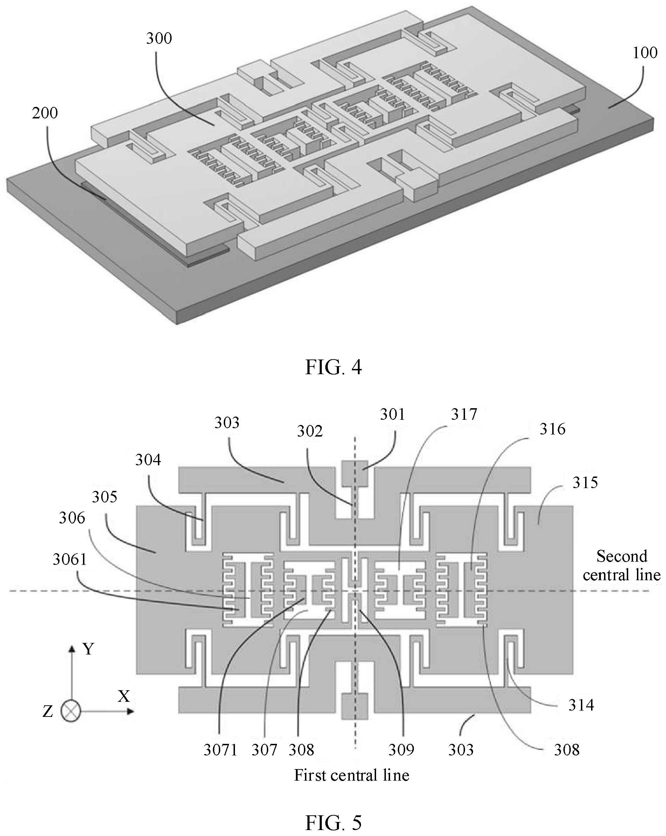

Based on the gyroscope structure shown in FIG. 3, as shown in FIG. 4, another embodiment of the gyroscope structure provided in this embodiment of this application further includes a detection electrode 200. As shown in FIG. 5, there are two first levers 303 at the first structural layer 300, and the two first levers 303 are mirror-symmetrical along the second central line. The first structural layer 300 further includes a fourth elastic structure 309, a first drive structure 306, a first drive detection structure 307, a second drive structure 316, and a second drive detection structure 317.

The detection electrode 200 is located between the substrate 100 and the first structural layer 300, that is, the substrate 100, the detection electrode 200, and the first structural layer 300 are stacked sequentially. The detection electrode 200 is configured to output a detection electrical-signal based on displacement of the first mass 305 along a third direction and displacement of the second mass 315 along a fourth direction. The third direction is perpendicular to the first central line and the first direction, that is, the third direction is along the Z-axis direction. The third direction is opposite to the fourth direction.

For example, the fastening anchor 301 includes a first sub-anchor (located above the first levers) and a second sub-anchor (located below the first levers), the third elastic structure 302 includes a first elastic sub-structure (located above the first levers) and a second elastic sub-structure (located below the first levers), and the first levers 303 include a first sub-lever (located above the second central line) and a second sub-lever (located below the second central line). The first elastic sub-structure is configured to connect the first sub-anchor to the first sub-lever, and the second elastic sub-structure is configured to connect the second sub-anchor to the second sub-lever. Likewise, the symmetrical first elastic structures 304 are configured to connect the first sub-lever to the first mass 305, and the symmetrical second elastic structures 314 are configured to connect the second sub-lever to the second mass 315. The first sub-lever and the second sub-lever are both configured to twist around the first central line. In this case, the entire first structural layer 300 is mirror-symmetrical along the second central line.

Optionally, the first lever 303 includes a bent portion, and the third elastic structure 302 is configured to connect the fastening anchor 301 to the bent portion. Due to presence of the fastening anchor 301, the first lever 303 may bend or deform to fit with a position of the fastening anchor 301. With the fastening anchor 301 connected to the bent portion by the third elastic structure 302, the fastening anchor 301 does not increase an area of the first structural layer 300, miniaturizing the gyroscope structure.

It should be understood that the bent portion may be a straight-line bend shown in FIG. 5, or may be an arc bend, a trapezoidal bend, or the like. Regardless of a shape of the bent portion, the torque direction of the first lever 303 is not changed.

The first drive structure 306, the second drive structure 316, the first drive detection structure 307, and the second drive detection structure 317 are all connected to the substrate 100. A process approach for the connection may be a bonding process, for example, gold-silicon bonding, aluminum-germanium bonding, anodic bonding, fusion bonding, or glass-frit (glass-frit) bonding. The first drive structure 306 and the first drive detection structure 307 are both coupled to the first mass 305. The second drive structure 316 and the second drive detection structure 317 are both coupled to the second mass 315.

Optionally, the first drive structure 306 and the second drive structure 316 are mirror-symmetrical along the first central line, and the first drive detection structure 307 and the second drive detection structure 317 are also mirror-symmetrical along the first central line. A symmetrical structure facilitates machining and manufacturing of the entire first structural layer, reducing complexity of a process flow.

The first drive structure 306 is configured to drive the first mass 305 to move along the first direction. The second drive structure 316 is configured to drive the second mass 315 to move along the second direction. The first drive detection structure 307 is configured to convert a first displacement signal generated due to displacement of the first mass 305 into a first electrical signal, and output the first electrical signal. The second drive detection structure 317 is configured to convert a second displacement signal generated due to displacement of the second mass 315 into a second electrical signal, and output the second electrical signal.

Specifically, the first drive structure 306 and the second drive structure 316 both include a fixed drive comb 3061 and comb tooth structures 308. The fixed drive combs 3061 and the comb tooth structures 308 are connected to the substrate 100. When direct current and alternating current signals are applied to the fixed drive combs 3061, an electrostatic force generated in the first drive structure 306 drives the first mass 305 and the first elastic structures 304 to move in the first direction along the X-axis, and an electrostatic force generated in the second drive structure 316 drives the second mass 315 and the second elastic structures 314 to move in the second direction along the X-axis.

The first drive detection structure 307 and the second drive detection structure 317 both include a drive detection comb 3071 and comb tooth structures 308. The drive detection combs 3071 and the comb tooth structures 308 are connected to the substrate 100. The drive detection combs 3071 may convert the signals generated due to mechanical displacement of the first mass 305 and the second mass 315 along the X-axis, into the first electrical signal and the second electrical signal, and output the first electrical signal and the second electrical signal. As feedback signals, the first electrical signal and the second electrical signal go through circuit stages such as phase shifting and amplification, and return to the drive combs, implementing closed-loop oscillation in a drive mode.

Optionally, the first structural layer 300 further includes the fourth elastic structure 309. The fourth elastic structure 309 is configured to connect the first mass 305 and the second mass 315. The fourth elastic structure 309 is configured to increase stiffnesses of the first mass 305 and the second mass 315 against opposite-direction displacement.

Specifically, the fourth elastic structure 309 is a foldable beam structure that connects the first mass 305 and the second mass 315. The fourth elastic structure 309 has a degree of freedom in moving along the X-axis direction, that is, the fourth elastic structure 309 can support the first mass 305 and a second mass to move along the X-axis. When the first mass 305 and the second mass 315 move in opposite directions along the X-axis direction, that is, in the drive mode of the gyroscope structure, the fourth elastic structure 309 has a same displacement amplitude, that is, the fourth elastic structure 309 participates in opposite-direction displacement of the first mass 305 and the second mass 315 and provides a stiffness against moving. When the first mass 305 and the second mass 315 move in a same direction along the X-axis direction, the fourth elastic structure 309 produces no displacement, or produces a displacement far less than a displacement produced in the case in which the first mass 305 and the second mass 315 move in opposite directions along the X-axis direction, that is, the fourth elastic structure 309 does not participate in same-direction displacement of the first mass 305 and the second mass 315 and does not provide a stiffness against moving. Therefore, due to introduction of the fourth elastic structure, there is a difference between a stiffness of the first mass and the second mass against opposite-direction displacement and a stiffness against same-direction displacement. Further, since a stiffness is related to a modal frequency, there is a difference between a modal frequency of the first mass and the second mass for opposite-direction displacement and a modal frequency for same-direction displacement, mitigating a common-mode error.

In this embodiment of this application, the first elastic structures 304, the second elastic structures 314, the first mass 305, the second mass 315, and connection forms thereof are arranged symmetrically about the first central line. The symmetrical arrangement can implement the drive mode of differential linear motion of the masses, that is, the two masses move in opposite directions along the X-axis. In the case of the symmetrical arrangement, a same-direction mode and an opposite-direction mode exist. Because two ends of the fourth elastic structure 309 are respectively connected to the first mass 305 and the second mass 315, a stiffness in the drive mode can be increased, that is, the same-direction mode (parasitic mode) and the opposite-direction mode (drive mode) can be distinguished from each other, reducing sensitivity of the gyroscope structure to external vibration.

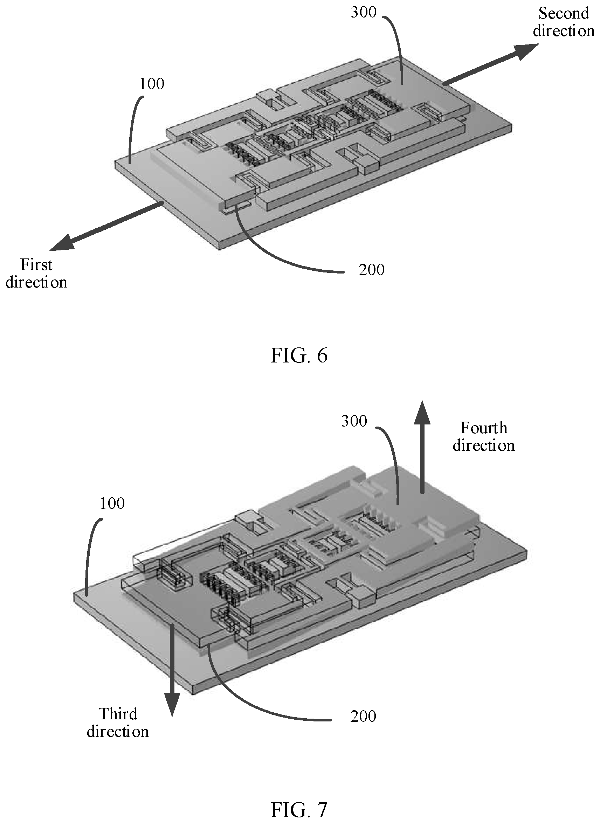

As shown in FIG. 6, in a case in which the gyroscope structure provided in this embodiment of this application is used, when the first mass 305 moves along the first direction and the second mass 315 moves along the second direction, drive displacements are produced. As shown in FIG. 7, due to the Coriolis effect, with a Y-axis angular velocity input superimposed on displacement along the X-axis, according to the right-hand rule for physical principles of Coriolis acceleration, the first mass 305 and the second mass 315 produce two displacements in opposite directions in the Z-axis direction, namely detection displacements. Specifically, the first mass 305 moves along the third direction, and the second mass 315 moves along the fourth direction. The third direction is perpendicular to the first central line and is located on a different plane, that is, the third direction and the fourth direction are both along the Z-axis direction. The drive displacements are modulated by a drive-mode resonance frequency. Therefore, the Coriolis force and the detection displacements are also modulated by the drive-mode resonance frequency. It should be understood that solid-line boxes in FIG. 6 and FIG. 7 indicate original positions of the first mass 305 and the second mass 315, that is, positions at which the first mass 305 and the second mass 315 are when they produce no displacements.

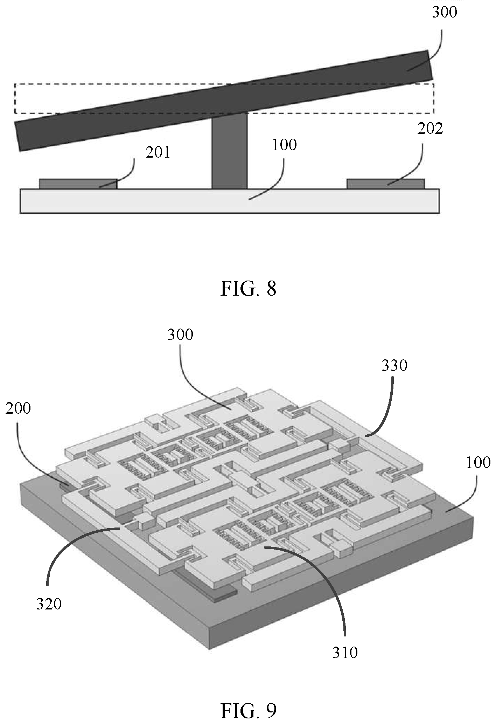

As shown in FIG. 8, there are also two detection electrodes 200. A first detection electrode 201 is located under the first mass 305, and a second detection electrode 202 is located under the second mass 315, that is, the first detection electrode 201 and the second detection electrode 202 are also mirror-symmetrical along the first central line. The first detection electrode 201 and the first mass 305 form a first parallel plate capacitor, and the second detection electrode 202 and the second mass 315 form a second parallel plate capacitor. When an angular velocity is input, differential detection displacement caused by the Coriolis force (displacement of the first mass 305 and the second mass 315 along the Z-axis direction) results in an increase in a gap of the first parallel plate capacitor and a decrease in a gap of the second parallel plate capacitor. Therefore, a differential change in capacitance is directly generated. The change may be read by an electrical signal amplifier, which outputs a detection electrical-signal. The detection displacements and the detection electrical-signal are both linear to the input angular velocity. Therefore, the input angular velocity can be derived based on either the detection displacements or the detection electrical-signal.

It should be understood that functions of the first drive structure 306, the second drive structure 316, the first drive detection structure 307, the second drive detection structure 317, and the detection electrode 200 may be alternatively implemented in another manner, that is, the gyroscope structure may not include the structures. This is not limited in this embodiment of this application. In conclusion, the first drive structure 306 and the second drive structure 316 may drive the first mass 305 and the second mass to perform differential oscillatory motion along the X-axis direction. The first elastic structures 304 and the second elastic structures 314 provide a degree of freedom in moving along the X-axis direction, implementing the drive mode. The fourth elastic structure 309 provides mechanical coupling between the first mass 305 and the second mass 315 in the drive mode. When an angular velocity is input around the Y-axis direction, the detection electrode 200 may output, by using an electrical signal, a differential displacement of the first mass 305 and the second mass 315 in the Z-axis direction, suppressing a common-mode error. The third elastic structure 302 provides a degree of freedom in twisting around the Y-axis. The two first levers 303 provide mechanical coupling between the first mass 305 and the second mass 315 in the detection displacement, implementing the structural force balance between the first mass 305 and the second mass 315 in the Z-axis direction while implementing the horizontal-axis gyroscopic effect. The substrate 100, the detection electrode 200, and the first structural layer 300 jointly constitute an implementation of a horizontal-axis gyroscope, with a function of detecting a horizontal-axis angular velocity.

In addition, the gyroscope structure provided in this embodiment of this application neither requires a frame structure nor occupies an area of the masses, improving sensitivity of the gyroscope structure. Moreover, the two masses are highly coupled, avoiding a problem of resonance frequency splitting.

Based on the gyroscope structure shown in FIG. 5, as shown in FIG. 9, another embodiment of the gyroscope structure provided in this embodiment of this application further includes a second structural layer 310, a first coupling structure 320, and a second coupling structure 330.

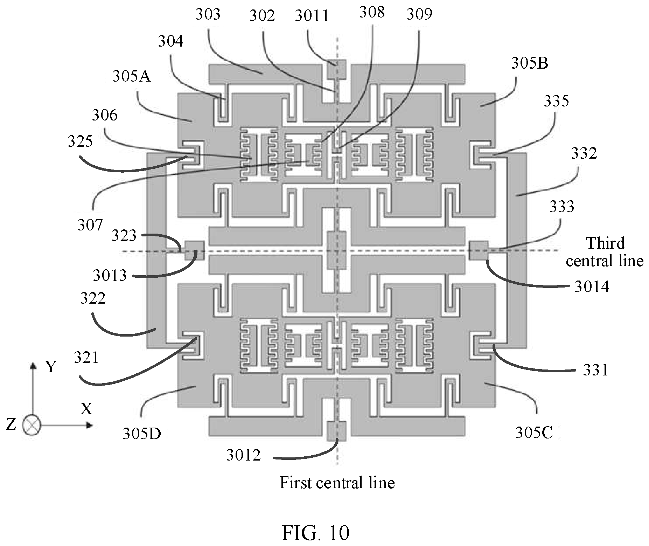

As shown in FIG. 10, the second structural layer 310 and the first structural layer 300 are mirror-symmetrical along a third central line. The third central line is parallel to the torque direction of the first lever 303. The first coupling structure 320 is configured to connect the first structural layer 300 to the second structural layer 310, and the second coupling structure 330 is configured to connect the first structural layer 300 to the second structural layer 310.

Specifically, based on a top view of the gyroscope structure, the first central line is located in the exact middle of the left and right sides of the first structural layer 300, and is also located in the exact middle of left and right sides of the second structural layer 310, where the first central line is parallel to the Y-axis, that is, the first central line is a central axis of the gyroscope structure along the X-axis direction; and the third central line is located in the exact middle of the first structural layer 300 and a second structure layer 310, where the third central line is parallel to the X-axis, that is, the third central line is a central axis of the gyroscope structure along the Y-axis direction. When the third central line is parallel to the X-axis direction, the third central line is located on a same plane as the torque direction of the first lever 303, and the second structural layer 310 and the first structural layer 300 are mirror-symmetrical along the third central line, it can be determined that the third central line is at a position shown in FIG. 10.

For example, in this case, the fastening anchors include a first anchor 3011, a second anchor 3012, a third anchor 3013, and a fourth anchor 3014. The first anchor 3011 is connected to the first structural layer 300, the second anchor 3012 is connected to the second structural layer 310, the third anchor 3013 is connected to the first coupling structure 320, and the fourth anchor 3014 is connected to the second coupling structure 330.

In addition, the first anchor 3011 includes a first sub-anchor (located above the second central line) and a second sub-anchor (located below the second central line), and the second anchor 3012 includes a third sub-anchor (close to the first structural layer) and a fourth sub-anchor (away from the first structural layer). In this case, the second sub-anchor and the third sub-anchor may be coupled into one anchor (located at a center point of the entire gyroscope structure).

Correspondingly, in this case, there are four first levers 303, eight first elastic structures 304, eight second elastic structures, and two third elastic structures 302. For specific connection relationships thereof, refer to corresponding descriptions in the foregoing embodiment. Details are not described herein in this embodiment of this application.

Because the second structural layer 310 and the first structural layer 300 are mirror-symmetrical along the third central line, a specific structure of the second structural layer 310 is the same as that of the first structural layer 300 (mirroring not considered). Details are not described herein in this embodiment of this application. In this case, the gyroscope structure includes four masses, namely a mass 305A, a mass 305B, a mass 305C, and a mass 305D. The mass 305A is the first mass 305 at the first structural layer 300, the mass 305B is the second mass 315 at the first structural layer 300, the mass 305C is a second mass 315 at the second structural layer 310, and the mass 305D is a first mass 305 at the second structural layer 310.

Further, the first coupling structure 320 includes a fifth elastic structure 325, a sixth elastic structure 321, a seventh elastic structure 323, the third anchor 3013, and a second lever 322. The third anchor 3013 is connected to the substrate 100, the seventh elastic structure 323 is configured to connect the third anchor 3013 to the second lever 322, the fifth elastic structure 325 is configured to connect the second lever 322 to the first structural layer 300, and the sixth elastic structure 321 is configured to connect the second lever 322 to the second structural layer 310. The fifth elastic structure 325 is configured to support the second lever 322 to move along a fifth direction, the sixth elastic structure 321 is configured to support the second lever 322 to move along the fifth direction, and the seventh elastic structure 323 is configured to support the second lever 322 to twist around the third central line. The fifth direction is perpendicular to the first direction and is located on a same plane as the first direction, that is, the fifth direction is the Y-axis direction.

Specifically, the third anchor 3013 is connected to the substrate 100. A process approach for the connection may be a bonding process, for example, gold-silicon bonding, aluminum-germanium bonding, anodic bonding, fusion bonding, or glass-frit (glass-frit) bonding. The second lever 322 is connected to the third anchor 3013 by the seventh elastic structure 323, to the first structural layer 300 by the fifth elastic structure 325, and to the second structural layer 310 by the sixth elastic structure 321. In this way, the first structural layer 300 is coupled to the second structural layer 310.

The fifth elastic structure 325 and the sixth elastic structure 321 have a degree of freedom in moving along the Y-axis direction, and have a high stiffness against moving along the X-axis direction. For example, the stiffnesses of the fifth elastic structure 325 and the sixth elastic structure 321 against moving along the X-axis direction are more than twice stiffnesses against moving along the Y-axis direction. To be specific, the fifth elastic structure 325 and the sixth elastic structure 321 can support the second lever 322 to move along the Y-axis relative to the first mass 305, but restrict the second lever 322 from moving along the X-axis relative to the first mass 305. The seventh elastic structure 323 has a degree of freedom in twisting around the third central line, that is, a degree of freedom in twisting around the X-axis direction. In addition, the seventh elastic structure 323 has a degree of freedom in twisting around the Z-axis direction, and has a high stiffness against rotating around the Y-axis. For example, the stiffness of the seventh elastic structure 323 against rotating around the Y-axis direction is more than twice stiffnesses against rotating around the X-axis direction and the Z-axis direction. To be specific, the seventh elastic structure 323 can support the second lever 322 to rotate around the X-axis direction and the Z-axis direction, but restricts the second lever 322 from rotating around the Y-axis direction. The third elastic structure 302 may be specifically a straight beam, a foldable beam, or the like that is along the X-axis.

Optionally, the fifth elastic structure 325 and the sixth elastic structure 321 are mirror-symmetrical along the third central line. The seventh elastic structure 323 is located at a center of the second lever 322, that is, the second lever 322 is connected to the seventh elastic structure 323 at a center point that is of the gyroscope structure in the Y-axis direction. In this case, when the second lever 322 twists around the X-axis direction, displacements of two ends of the second lever 322 along the Z-axis direction (which may also be understood as a force transfer ratio) are 1:1.

Optionally, the second coupling structure 330 and the first coupling structure 320 are mirror-symmetrical along the first central line. A specific structure of the second coupling structure 330 is the same as that of the first coupling structure 320 (mirroring not considered). The second coupling structure 330 includes an elastic structure 331, an elastic structure 335, a lever 332, an elastic structure 333, and the fourth anchor 3014. Specific connection relationships and features thereof are not described herein in this embodiment of this application. When the second coupling structure 330 and the first coupling structure 320 are not mirror-symmetrical along the first central line, specific components and connection manners of the second coupling structure 330 are also the same as those of the first coupling structure 320. A difference lies in that a positional relationship of the second coupling structure 330 may change, failing to meet mirror symmetry.

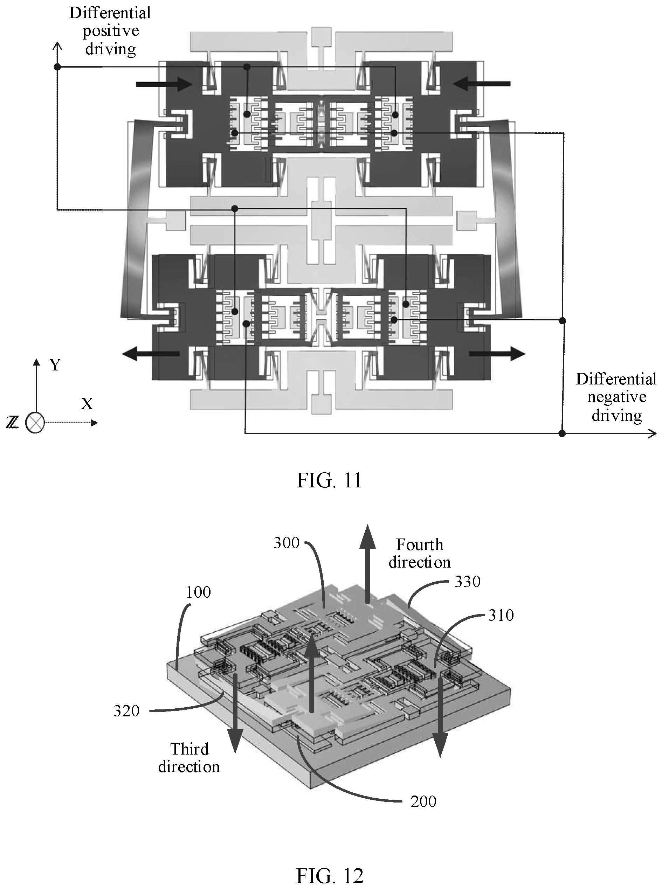

In this embodiment of this application, the first coupling structure 320 and the second coupling structure 330 couple the first structural layer 300 and the second structural layer 310, to implement two pairs of differential motion of the four masses along the X-axis direction. A drive mode thereof is shown in FIG. 11. To be specific, the mass 305A and the mass 305B at the first structural layer 300 constitute one pair of differential motion, and the mass C and the mass D at the first structural layer 300 constitute another pair of differential motion. In addition, the two pairs of differential motion are in opposite directions, with the mass 305A and the mass 305C forming differential positive driving while the mass 305B and the mass 305D forming differential negative driving.

Furthermore, as shown in FIG. 12, the first coupling structure 320 and the second coupling structure 330 also implement two pairs of differential motion of the four masses along the Z-axis direction. To be specific, the mass 305A at the first structural layer 300 and the mass 305C at the second structural layer 310 constitute one pair of differential detection displacement, and their displacement directions along the Z-axis are both the third direction; and the mass B at the first structural layer 300 and the mass D at the second structural layer 310 constitute another pair of differential detection displacement, and their displacement directions along the Z-axis are both the fourth direction.

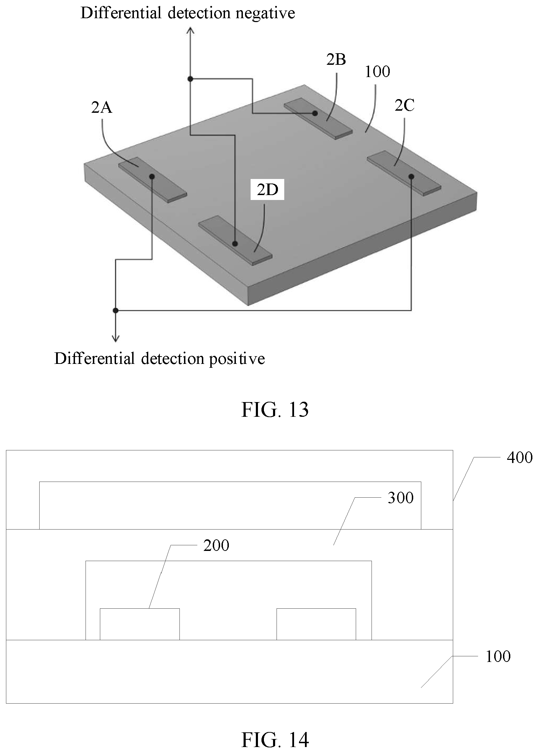

It should be understood that solid-line boxes in FIG. 11 and FIG. 12 indicate original positions of the first structural layer 300 and the second structural layer 310, that is, positions at which the first structural layer 300 and the second structural layer 310 are when they produce no displacements. Further, with reference to a formula for the Coriolis force, the two pairs of differential detection displacement are in opposite directions. A detection mode thereof is shown in FIG. 13. In this case, there are four detection electrodes 200. The four detection electrodes 200 are located under the four masses, respectively. To be specific, a detection electrode 2A is located under the mass 305A, a detection electrode 2B is located under the mass 305B, a detection electrode 2C is located under the mass 305C, and a detection electrode 2D is located under the mass 305D, constituting two differential capacitance outputs. The detection electrode 2A and the mass 305A, and the detection electrode 2B and the mass 305B constitute one group of differential detection capacitors. The detection electrode 2C and the mass 305C, and the detection electrode 2D and the mass 305D constitute one group of differential detection capacitors. The detection electrode 2A and the detection electrode 2C are differential detection positives, while the detection electrode 2B and the detection electrode 2D are differential detection negatives.

It should be understood that, based on the first structural layer and the second structural layer shown in FIG. 10, the gyroscope structure provided in this embodiment of this application may further couple more third structural layers, fourth structural layers, and the like by using more coupling structures. For example, the gyroscope structure includes eight masses or 16 masses. This is not limited in this embodiment of this application.

Through configuration of a differential positive drive electrical-signal and a differential negative drive electrical-signal shown in FIG. 11, the four masses can perform two pairs of differential motion along the X-axis direction, further implementing closed-loop oscillation in the drive mode. As shown in FIG. 12, based on the Coriolis force, the four masses can perform two pairs of differential motion along the Z-axis direction. When the four masses perform the two pairs of differential motion along the X-axis, drive displacements are produced. According to the right-hand rule, displacement of the four masses in the Z direction caused by the Coriolis force is also two pairs of differential motion. In this case, detection displacements are produced. In addition, a form of two pairs of differential motion and a displacement detection form of the four masses can further eliminate a common-mode error, mitigating deterioration of precision and stability caused by a bonding-process-introduced inconsistency in gaps of the detection capacitors.

The foregoing describes the gyroscope structure provided in embodiments of this application. The following describes, with reference to the accompanying drawings, related devices provided in embodiments of this application.

As shown in FIG. 14, an embodiment of this application further provides a chip. The chip is a MEMS chip. The chip includes the gyroscope structure described in some of the embodiments in FIG. 3 to FIG. 13, and a package structure. The gyroscope structure includes a substrate 100, a detection electrode 200, and a first structural layer 300 that are stacked sequentially.

Optionally, the package structure is a cover plate 400. The cover plate 400 is connected to the first structural layer 300 or the substrate 100. The cover plate 400 is configured to enclose the first structural layer 300 in a sealed cavity, with the sealed cavity being a vacuum.

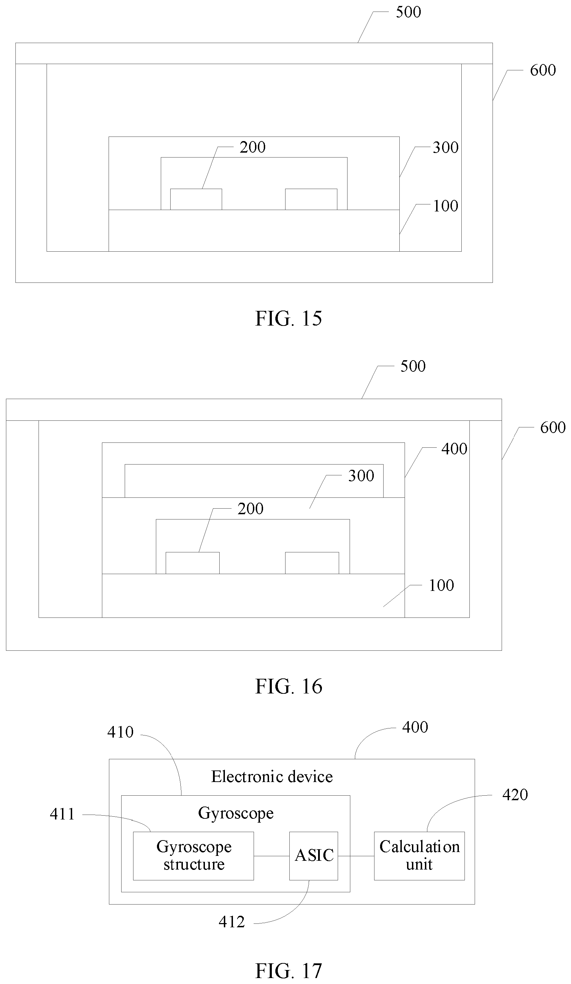

Optionally, as shown in FIG. 15, the package structure includes a cover plate 500 and a package substrate 600, with the cover plate 500 connected to the package substrate 600. The gyroscope structure is placed on the package substrate 600. In this case, the package structure may enclose the entire gyroscope structure in a sealed cavity, with the sealed cavity being a vacuum.

Optionally, as shown in FIG. 16, the package structure includes a first cover plate 400, a second cover plate 500, and a package substrate 600, that is, the package structure is a form of a combination of FIG. 14 and FIG. 15. The first cover plate 400 is configured to enclose the first structural layer 300 in a first sealed cavity, with the first sealed cavity being a vacuum. The second cover plate 500 is connected to the package substrate 600, and the gyroscope structure is placed on the package substrate 600. In this case, the second cover plate 500 and the package substrate 600 may enclose the entire gyroscope structure in a second sealed cavity. The second sealed cavity may be or may not be a vacuum.

In the possible implementations in FIG. 14 to FIG. 16, if a sealed cavity is required to be a vacuum, a vacuum level in the sealed cavity is less than or equal to 100 Pa.

An embodiment of this application further provides an electronic device. The electronic device includes a calculation unit, and the gyroscope structure described in some of the embodiments in FIG. 3 to FIG. 13 or the chip described in some of the embodiments in FIG. 14 to FIG. 16. It should be understood that packaging the gyroscope structure described in some of the embodiments in FIG. 3 to FIG. 13 can form the chip described in some of the embodiments in FIG. 14 to FIG. 16. In this embodiment of this application, an example is used for description, in which the electronic device or a gyroscope includes the gyroscope structure, but the gyroscope structure may be presented as the chip. Details are not described again in this embodiment of this application. The electronic device may be any electronic device that needs to be equipped with a gyroscope. For example, the electronic device serves as a carrier; and the gyroscope structure serves as a part of a sensor on the carrier, is configured to measure angular velocities of the carrier during roll and pitch rotations in inertial space, can obtain an attitude of the carrier through integration, and provides functions of attitude angle sensing and alignment. The electronic device may be a communication device (a base station, a microwave device, or an antenna device), a mobile terminal (a mobile phone or a tablet computer), or the like. The gyroscope structure may also be configured to measure a rotational speed of Earth for north finding.

In addition, the gyroscope structure may be alternatively packaged together with components such as a Z-axis gyroscope and a three-axis accelerometer to serve as an inertial measurement unit. In this case, the electronic device serves as a carrier; and the gyroscope structure serves as a part of the inertial measurement unit on the carrier, and is configured to obtain navigation information such as a spatial attitude, a velocity, a position, and the like of the carrier. The electronic device may be a smart vehicle, industrial equipment, a mobile robot, aerospace equipment, or the like.

For example, as shown in FIG. 17, the electronic device 400 includes a gyroscope 410 provided in this embodiment of this application. The gyroscope 410 is a horizontal-axis gyroscope. The gyroscope 410 includes an application-specific integrated circuit (application-specific integrated circuit, ASIC) 412, and the gyroscope structure 411 described in some of the embodiments in FIG. 3 to FIG. 13 or the chip described in some of the embodiments in FIG. 14 to FIG. 16. A packaging form of the gyroscope 410 is not limited in this embodiment of this application.

The application-specific integrated circuit 412 is electrically connected to the gyroscope structure 411. The application-specific integrated circuit 412 is configured to provide a drive signal to the gyroscope structure 411, to enable the first mass and the second mass to move along the X-axis. After the detection electrode of the gyroscope structure 411 outputs a detection electrical-signal, the application-specific integrated circuit 412 processes the detection electrical-signal, to obtain output data. In this case, the calculation unit 420 performs further calculations on the output data and obtains final angular velocity information of the electronic device 400.

Persons of ordinary skill in the art may be aware that the structural units in the examples described with reference to embodiments disclosed in this specification can be implemented by electronic hardware or a combination of computer software and electronic hardware. Whether the functions are performed by hardware or software depends on particular applications and design constraints of the technical solutions. Persons skilled in the art may use different methods to implement the described functions for each particular application, but it should not be considered that the implementation goes beyond the scope of embodiments of this application.

In the several embodiments provided in this application, it should be understood that the disclosed structure may be implemented in another manner. For example, the embodiments described above are merely examples. For example, division of the structure may be other division during actual implementation. For example, a plurality of units or components may be combined or integrated into another structure, or some features may be ignored. Some or all of the structures may be selected based on an actual requirement to achieve the objectives of the solutions in embodiments. In addition, the displayed or discussed mutual couplings or direct couplings or communication connections may be implemented by using some interfaces. The indirect couplings or communication connections between the structures or units may be implemented in an electrical form, a mechanical form, or another form.

In addition, the structures in embodiments of this application may be integrated in one structure, each of the structures may stand alone physically, or two or more structures may be integrated in one structure.

The foregoing embodiments are merely intended for describing the technical solutions in this application other than limiting the technical solutions in this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions in embodiments of this application.

## Claims

1. A gyroscope structure, comprising a substrate and a first structural layer, wherein the first structural layer comprises a fastening anchor, a first elastic structure, a second elastic structure, a first lever, a third elastic structure, a first mass, and a second mass, wherein
the fastening anchor is connected to the substrate, the third elastic structure is configured to connect the fastening anchor to the first lever, the first elastic structure is configured to connect the first lever to the first mass, and the second elastic structure is configured to connect the first lever to the second mass; and
the first mass and the second mass are mirror-symmetrical along a first central line, and the first central line is perpendicular to a torque direction of the first lever.

2. The gyroscope structure according to claim 1, wherein the gyroscope structure further comprises a detection electrode, the detection electrode is located between the substrate and the first structural layer, the detection electrode is configured to output a detection electrical-signal based on displacement of the first mass along a third direction and displacement of the second mass along a fourth direction, the third direction is perpendicular to the first central line and is located on a different plane, and the third direction is opposite to the fourth direction.

3. The gyroscope structure according to claim 1 or 2, wherein the first structural layer further comprises a first drive structure and a second drive structure, the first drive structure is connected to the substrate and coupled to the first mass, and the second drive structure is connected to the substrate and coupled to the second mass; and
the first drive structure is configured to drive the first mass to move along the first direction, the second drive structure is configured to drive the second mass to move along the second direction, the first direction is perpendicular to the first central line, and the first direction is opposite to the second direction.

4. The gyroscope structure according to claim 3, wherein the first drive structure and the second drive structure are mirror-symmetrical along the first central line.

5. The gyroscope structure according to any one of claims 1 to 4, wherein the first structural layer further comprises a first drive detection structure and a second drive detection structure, the first drive detection structure is connected to the substrate and coupled to the first mass, and the second drive detection structure is connected to the substrate and coupled to the second mass; and
the first drive detection structure is configured to convert a first displacement signal generated due to displacement of the first mass into a first electrical signal, and output the first electrical signal; and the second drive detection structure is configured to convert a second displacement signal generated due to displacement of the second mass into a second electrical signal, and output the second electrical signal.

6. The gyroscope structure according to claim 5, wherein the first drive detection structure and the second drive detection structure are mirror-symmetrical along the first central line.

7. The gyroscope structure according to any one of claims 1 to 6, wherein the first elastic structure and the second elastic structure are mirror-symmetrical along the first central line.

8. The gyroscope structure according to any one of claims 1 to 7, wherein there are at least two first elastic structures and at least two second elastic structures.

9. The gyroscope structure according to any one of claims 1 to 8, wherein the third elastic structure is located at a center of the first lever.

10. The gyroscope structure according to any one of claims 1 to 9, wherein the first elastic structure is a spring or a foldable beam, the second elastic structure is a spring or a foldable beam, and the third elastic structure is a spring, a straight beam, or a foldable beam.

11. The gyroscope structure according to any one of claims 1 to 10, wherein the first structural layer further comprises a fourth elastic structure, and the fourth elastic structure is configured to connect the first mass and the second mass.

12. The gyroscope structure according to any one of claims 1 to 11, wherein the first lever comprises a bent portion, and the third elastic structure is configured to connect the fastening anchor to the bent portion.

13. The gyroscope structure according to any one of claims 1 to 12, wherein there are two first levers, the two first levers are mirror-symmetrical along a second central line, and the second central line is parallel to the torque direction of the first lever.

14. The gyroscope structure according to any one of claims 1 to 13, wherein the gyroscope structure further comprises a second structural layer, a first coupling structure, and a second coupling structure; and
the second structural layer and the first structural layer are mirror-symmetrical along a third central line, the third central line is parallel to the torque direction of the first lever, the first coupling structure is configured to connect the first structural layer to the second structural layer, and the second coupling structure is configured to connect the first structural layer to the second structural layer.

15. The gyroscope structure according to claim 14, wherein the first coupling structure comprises a fifth elastic structure, a sixth elastic structure, a seventh elastic structure, and a second lever, wherein
the seventh elastic structure is configured to connect the fastening anchor to the second lever, the fifth elastic structure is configured to connect the second lever to the first structural layer, and the sixth elastic structure is configured to connect the second lever to the second structural layer.

16. The gyroscope structure according to claim 14 or 15, wherein the fastening anchors comprise a first anchor, a second anchor, a third anchor, and a fourth anchor, the first anchor is connected to the first structural layer, the second anchor is connected to the second structural layer, the third anchor is connected to the first coupling structure, and the fourth anchor is connected to the second coupling structure.

17. The gyroscope structure according to any one of claims 14 to 16, wherein the fifth elastic structure and the sixth elastic structure are mirror-symmetrical along the third central line.

18. The gyroscope structure according to any one of claims 14 to 17, wherein the seventh elastic structure is located at a center of the second lever.

19. The gyroscope structure according to any one of claims 14 to 18, wherein the first coupling structure and the second coupling structure are mirror-symmetrical along the first central line.

20. A chip, comprising the gyroscope structure according to any one of claims 1 to 19 and a package structure, wherein the package structure is configured to enclose the first structural layer in a sealed cavity.

21. The chip according to claim 20, wherein a vacuum level in the sealed cavity is less than or equal to 100 Pa.

22. A gyroscope, comprising the gyroscope structure according to any one of claims 1 to 19 and an application-specific integrated circuit, wherein the application-specific integrated circuit is electrically connected to the gyroscope structure, and the application-specific integrated circuit is configured to provide a drive signal to the gyroscope structure.

23. An electronic device, comprising the gyroscope structure according to any one of claims 1 to 19 and a calculation unit, wherein the calculation unit is configured to determine angular velocity information based on output data of the gyroscope structure.
